# EUROPEAN PATENT SPECIFICATION

(11) **EP 2 437 152 B1**
(45) Date of publication and mention of the grant of the patent: **20.11.2019**
(21) Application number: 11180098.3
(22) Date of filing: 05.09.2011
(51) Int. Cl.: G06F 3/0483, G06F 3/0488, G06F 17/24

(54) **Apparatus and method for turning e-book pages in portable terminal**
Vorrichtung und Verfahren zum Blättern von e-Book-Seiten in einem tragbaren Endgerät
Appareil et procédé pour tourner des pages de livre électronique (e-book) dans un terminal portable

(30) Priority: 01.10.2010 KR 20100095815
(43) Date of publication of application: 04.04.2012
(73) Proprietor: Samsung Electronics Co., Ltd., Suwon-si, Gyeonggi-do, 443-742 (KR)
(72) Inventor: Lee, Sung-Min, Seoul (KR); Lee, Dal-Kwang, Gyeonggi-do (KR)
(74) Representative: HGF Limited

(56) References cited:
- EP-A2- 2 104 026
- CN-A- 101 794 191
- US-A- 5 463 725
- US-A1- 2001 024 195
- US-A1- 2004 143 796
- US-A1- 2006 277 478
- US-A1- 2010 045 616
- US-B1- 6 448 986

## Description

### BACKGROUND OF THE INVENTION

### 1. Field of the Invention

The present invention relates to a portable terminal. More particularly, the present invention relates to an apparatus and method for turning electronic book (e-book) pages in a portable terminal having an e-book function.

### 2. Description of the Related Art

Portable terminals are in trend of sudden spread owing to the convenience of carrying. Accordingly, service providers (i.e., system manufacturers) are competitively developing terminals having more special functions to guarantee many users. For example, the portable terminals are providing various functions of phone books, games, schedulers, short messages, the Internet, electronic mail (e-mail) messages, morning wakeup calls, MPEG-1 Audio Layer 3 (MP3) players, digital cameras, electronic dictionaries, e-books and the like.

Recently, an e-book, one of information provision media replacing a conventional paper book, is being introduced to show text contents in an electronic display manner. The e-book is of a scheme of, after storing text contents in a flash memory or a built-in hard disk, showing the stored text contents through a display screen. The e-book has an advantage of being capable of, after storing a large amount of book stories at a time, selecting and showing a wanted story.

At this time, the display screen can display only contents of a restricted region. Accordingly, to continuously seamlessly show the next story of the contents, a User Interface (UI) providing a page move or scroll function should be provided. Generally, the e-book can show a story of text contents on a screen while moving through a page up / page down function using a key input means provided in the e-book. Through this method, a user can read the full story of the text contents stored in the e-book.

However, a UI of a scheme of turning pages through key manipulation as above is merely of a direction control scheme of the most basic form and is not designed from an ergonomic viewpoint of making it convenient for a user to use. So, there is a problem that it is inconvenient for the user to convert pages of contents naturally.

US5463725A discloses an interface for making information available to a user provides a display similar to a printed book or magazine. In order to "turn the page" of the displayed book, the user touches the screen with his hand or a pointing device, and moves it across the screen. Movement across the screen, while touching the screen, causes an animated turning of the page of the displayed printed material. This page turning technique is very similar to the turning of a page with an actual book or magazine.

US-2010/045616-A1 discloses a method for showing page flip effect when use electronic device enjoy electronic document, the method provides a flip-page operation table, the flip-page operation table defines relationships between flip effect parameters and lengths of a first touch path or a second touch path. The method comprising: receiving touch signals, determining the touch path and lengths of the touch path according the touch signals; determining which page will be brought into view (hereinafter target page) according to the touch path; obtaining a flip effect parameter when the touch path increase to lengths defined in flip effect table; combining a combined page according to the current page, the next page and the flip effect parameter. Present invention also providing an electronic device capable of executing said steps.

US-20001/024195-A1 provides a user interface for gaining access to information which is user friendly, without regard to an experience of using a computer. There are included a page turning operation detecting step A1 of outputting a page turning operation detecting signal when a dragging is made on an operation unit in parallel or anti-parallel to a predefined page turning direction at a current page read from a storage unit 4 that is to be displayed at present, a next display page setting step A2 of setting a preceding page or a succeeding page immediately before or after a current page depending on a direction of a dragging operation to a next display page to be displayed at the next time, when a page turning operation detecting signal is detected in the page turning operation detecting step Al,; and a page turning process step A3 of displaying the next display page set in the next display page setting step in place of the current page on a display unit 1.

CN101794191A relates to an electronic book browser which is used for displaying an electronic book on a display. The comprises electronic book browser comprises an operation module, an execution module and a display module, wherein the operation module is used for users to carry out item operations on the electronic book, and the item operations comprises the operation of starting translational paging and the operation of stopping translational paging; the execution module is used for reading the next page required to be displayed from a storage according to the operation of starting translational paging; and the display module is used for displaying the page required to be displayed; the last page is shifted out in parallel and the next page is shifted in parallel; when the page is in the dynamic shifting process, the users can carry out the operation of stopping translational paging so as to fixedly display the picture in the shifting process. The invention also provides a translational paging method of the electronic book. The front and back adjacent pages are connected to show the effect of cross-page composition by the electronic book browser and the translational paging method thereof through a left and right shifting mode.

EP2104026A2 relates to an electronic document reproduction apparatus supporting a preview function upon outputting an electronic book, and a reproducing method thereof. In more particular, EP2104026-A2 relates to a method, computer program product and apparatus for searching for contents of a previous page or following page while reading an electronic document (e.g. an electronic book) through the apparatus, moving to a corresponding page, and returning to an original page.

In US-2006/277478-A1 a determination is made as to when to display and hide obstructive user interface elements. Obstructive user interface elements are removed from the display when not needed by the user and displayed when needed by the user. When the obstructive interface elements are removed from the display, the user has more viewable area that is not obstructed. For example, in some browser applications, when the title bar, address bar and menu bar are removed, the user is provided with a view that shows much more of the web page. When the obstructive user interface elements are needed, they are temporarily displayed on the device. Once the task has been completed, the obstructive user elements are then hidden again automatically, which allows the user to continue viewing in full screen mode.

US-6448986-B1 relates to graphical user interfaces for electronic displays, and more particularly, to a system and method for hiding and displaying graphical objects on a computer display, television monitor, or similar display screen for an electronic device.

### SUMMARY OF THE INVENTION

It is an aim of certain embodiments of the invention to solve, mitigate, or obviate, at least partly, at least one of the problems and/or disadvantages associated with the prior art. Certain embodiments aim to provide at least one of the advantages described below.

The present invention provides a solution for the mentioned problems according to the independent claims. Preferred embodiments are provided by the dependent claims. The reader should bear in mind that some embodiments or examples of the description may not comprise all features of the invention as claimed. The embodiments and/or examples of the following description which are not covered by the claims, are provided for illustrative purpose only and are only intended to assist the reader in understanding the present invention. However, such embodiments and/or examples which are not covered by the claims do not determine the claimed invention.

Certain embodiments of the present invention aim to substantially solve at least the above problems and/or disadvantages and to provide at least the advantages below. Accordingly, certain embodiments of the present invention provide an apparatus and method for turning electronic book (e-book) pages in a portable terminal having an e-book function.

Certain embodiments of the present invention provide an apparatus and method for turning e-book pages in an analog manner, for enabling a user to convert pages of contents naturally with a feeling as if he/she really turns a book in a portable terminal having an e-book function.

An aspect of the present invention provides a method for turning electronic book (e-book) pages in a portable terminal having an e-book function, the method being as defined by claim 1.

It will be appreciated that executing the e-book can also be described as executing, running, or carrying out the instructions of an e-book application or program.

In the context of this specification, a touch down may also be described as the touching, pressing, or making contact with a touch sensitive input means, such as a touch sensitive screen on which pages of the e-book are displayed, for example with a finger, stylus, or other suitable implement or tool. A touch down therefore corresponds to an event consisting of bringing a finger, stylus, implement or tool down into contact with the touch sensitive input means.

Similarly, a touch up may also be described as ceasing or terminating a touching of the touch sensitive input means. It represents the termination of a contact with the touch sensitive input means. In other words, a touch up is a disengagement from, or a release of the touch sensitive input means. A touch up therefore corresponds to an event consisting of bringing a finger, stylus, implement or tool away from the touch sensitive input means, breaking contact. A touch up can also be described as a lifting off, from the touch sensitive input means, of the finger, stylus, implement or tool.

In the context of this specification, a drag may also be described as the movement of a finger, stylus, implement or tool across a touch sensitive input means whilst maintaining contact with that input means. Typically, a drag will be preceded by, or begin with a touch down (contact is first made), and be followed by, or terminated by a touch up (contact is broken/released). Additionally, one drag event may immediately follow another, such that the end position of one drag is the start position of the next.

A drag in the right direction (a drag right) may be described as a drag which begins at a first position (start position) on the touch sensitive input means (e.g. the position at which a touch down occurs) and ends at a second position (end position) (e.g. the position at which a touch up occurs), where the second position is to the right of the first position (i.e. the second position is further right than the first position, but not necessarily directly to the right; the second position may additionally be above, level with, or below the first position). Similarly, a drag in the left direction (a drag left) may be described as one in which the end position is to the left (but not necessarily directly to the left) of the start position, a drag down may be described as one in which the end position is below (but not necessarily directly below - it could additionally be to the left or to the right of) the start position, and a drag up may be described as one in which the end position is above (but not necessarily directly above) the start position.

It will be appreciated that the step or feature of determining if a touch down is input more left than a predetermined right User Interface (UI) activation region of the e-book in certain embodiments comprises determining whether a position at which a touch sensitive screen (displaying one or more pages of the e-book) is initially touched (in the context of a touch, optional drag, and release sequence of events) is to the left of a predetermined area of the touch sensitive screen. The input of a touch down thus corresponds to performing a touch down, i.e. touching the touch sensitive input means.

In certain embodiments, the step or feature of then determining if, in a state where the touch down is input, a drag and touch up is input in the right direction, comprises determining whether, following a touch down and without releasing or breaking contact with the touch sensitive screen, a drag right is performed, followed by or terminated by a touch up (a release). As will be appreciated, the movement constituting the drag right may come to a halt before the touch up (i.e. the contacting finger, stylus etc. may be stationary with respect to the input means just before the touch up is performed), or alternatively, the touch up may be performed while the finger, stylus etc. is in motion across the touch sensitive input means. Thus, the touch up may comprise a lift at the end of a sweep across a touch sensitive screen. Inputting a drag and touch up thus corresponds to performing a drag and release.

In certain embodiments, displaying the just preceding page on a screen, comprises displaying on a screen (e.g. a touch sensitive screen) the page of an e-book immediately preceding the page that was displayed while the touch down (contact), drag, and touch up (release) operations were being performed.

In certain embodiments the method further comprises:
determining if a touch down is input more right than a predetermined left UI activation region of the e-book and then, in a state where the touch down is input, a drag and touch up is input in the left direction; and
when the touch down is input more right than the predetermined left UI activation region of the e-book and then, in the state where the touch down is input, the drag and touch up is input in the left direction, displaying the just next page on the screen.

It will be appreciated that the step or feature of determining if a touch down is input more right than a predetermined left User Interface (UI) activation region of the e-book in certain embodiments comprises determining whether a position at which contact is made (i.e. initiated) with a touch sensitive screen (displaying the e-book) is to the right of a predetermined area of the touch sensitive screen.

In certain embodiments, the step or feature of then determining if, in a state where the touch down is input, a drag and touch up is input in the left direction, comprises determining whether, following a touch down and without releasing or breaking contact with the touch sensitive screen, a drag left is performed, followed by or terminated by a touch up (a release).

In certain embodiments a right partial region (a right portion) of the screen (e.g. the touch sensitive screen displaying the e-book pages) is defined as a right UI activation region, and a left partial region (left portion) of the screen is defined as a left UI activation region.

In certain embodiments the method further comprises:
determining if a touch down is input in the predetermined right UI activation region of the e-book (e.g. a predetermined right portion of a touch sensitive screen displaying the e-book);
when the touch down is input in the predetermined right UI activation region of the e-book, displaying the right side of the e-book (e.g. displaying at least a right page, e.g. page number R, of the e-book open at the appropriate position, i.e. a current, or currently selected position);
determining if a drag and touch up is input in the left direction in a state where the touch down is input in the predetermined right UI activation region (i.e. is the drag performed after the touch down is performed, without releasing/breaking contact); and
when the drag and touch up is input in the left direction in the state where the touch down is input in the predetermined right UI activation region, displaying the just next page on the screen (e.g. displaying the page immediately following the page that was displayed while the touch down, drag, and touch up were being performed, i.e. page number R+1). In other words, a virtual page turn of one page forwards is performed.

In certain embodiments, the method further comprises:
determining if a drag is input in the right direction in the state where the touch down is input in the predetermined right UI activation region (i.e. determining if, following a touch down in the right UI activation region, a drag right is performed without breaking contact with the touch sensitive input means);
when the drag is input in the right direction in the state where the touch down is input in the predetermined right UI activation region, displaying the number of pages increasing as much as the dragging on the right side of the e-book (e.g. displaying a representation of a plurality of pages following on from the currently displayed right page, the number N of said plurality of pages being determined by a length of the drag right, such as a difference between nominal X coordinates of the end and start positions of the drag right);
determining if a drag and touch up is input in the left direction in the state where the drag is input in the right direction (i.e. determining if a drag left is performed after the drag right, without breaking contact in between); and
when the drag and touch up is input in the left direction in the state where the drag is input in the right direction, displaying a next page corresponding to the number of the increased pages (e.g. displaying a page corresponding to the last of said plurality of pages, or displaying a page appropriate or corresponding to a virtual turn of N pages).

It will be appreciated that, in certain embodiments, displaying the number of pages comprises displaying just edge portions (right hand edges) of the N pages. If the right hand page displayed in response to the touch down is page number R, then the drag right determines the number N of following pages displayed (i.e. represented), and in certain embodiments the drag left then results in the page number R+N being displayed.

In certain embodiments, the method further comprises:
when a touch down is input in the predetermined left UI activation region of the e-book (e.g. in a predetermined left portion of a touch sensitive screen displaying the e-book), displaying the left side of the e-book (e.g. displaying at least a left page, number L, of the e-book open at the appropriate position, i.e. a current, or currently selected position);
determining if a drag and touch up is input in the right direction in the state where the touch down is input in the predetermined left UI activation region (i.e. determining if, following a touch down in the left UI activation region, a drag right is performed without breaking contact with the touch sensitive input means); and
when the drag and touch up is input in the right direction in the state where the touch down is input in the predetermined left UI activation region, displaying the just preceding page on the screen (e.g. the immediately preceding page, number L-1).

In certain embodiments the method further comprises:
determining if a drag is input in the left direction in the state where the touch down is input in the predetermined left UI activation region (i.e. is the drag left performed, after the touch down, without breaking contact);
when the drag is input in the left direction in the state where the touch down is input in the predetermined left UI activation region, displaying the number of pages decreasing as much as the dragging on the left side of the e-book (e.g. displaying a representation of a plurality of pages preceding the currently displayed page, number L, the number N of said plurality of pages being determined by a length of the drag left, such as a difference between nominal X coordinates of the end and start positions of the drag right);
determining if a drag and touch up is input in the right direction in a state where the drag is input in the left direction (i.e. determining if a drag right is performed after the drag left, without breaking contact in between); and
when the drag and touch up is input in the right direction in the state where the drag is input in the left direction, displaying a preceding page corresponding to the number of the decreased pages (e.g. displaying a page corresponding to the first (earliest, lowest numbered) of said plurality of pages, or displaying a page appropriate or corresponding to a virtual turn of N pages).

It will be appreciated that, in certain embodiments, displaying the number of pages comprises displaying just edge portions (left hand edges) of the N pages. If the left hand page displayed in response to the touch down is page number L, then the drag left determines the number N of preceding pages displayed (i.e. represented), and in certain embodiments the drag right then results in the page number L-N being displayed.

In certain embodiments the method further comprises:
determining if a bookmark On switch (e.g. a portion of a touch sensitive input means, such as a screen, designated as a bookmark On switch) is touched in a predetermined upper UI activation region of the e-book; and
when the bookmark On switch is touched in the predetermined upper UI activation region of the e-book, activating a bookmark function.

In certain embodiments, the method further comprises:
determining if a touch down is input in the predetermined upper UI activation region of the e-book and then, in a state where the touch down is input, a drag is input in the downward direction (i.e. is a drag down performed, following the touch down, without breaking contact);
when the touch down is input in the predetermined upper UI activation region of the e-book and then, in the state where the touch down is input, the drag is input in the downward direction, generating a clip (e.g. an image or representation of a clip) corresponding to a bookmark to be added;
determining if a touch up is input in the state where the drag is input in the downward direction (e.g. is the drag down followed by, or terminated by, a touch up); and
when the touch up is input in the state where the drag is input in the downward direction, positioning the generated clip in a position where the touch up is input.

In certain embodiments, the method further comprises:
determining if a touch down is input for a clip corresponding to a previously added bookmark in the e-book (e.g. determining if the position of the touch down corresponds to the position of a previously generated clip);
when the touch down is input for the clip corresponding to the previously added bookmark in the e-book, displaying a corresponding bookmark page;
determining if a long touch (e.g. a continuous touch longer than a predetermined threshold period of time) is sensed for the clip whose bookmark page has been displayed; and
when the long touch is sensed for the clip whose bookmark page has been displayed, displaying information on the previously added bookmark.

In certain embodiments, the method further comprises:
determining if a touch down is input for a clip corresponding to a previously added bookmark in the e-book;
when the touch down is input for the clip corresponding to the previously added bookmark in the e-book, displaying a corresponding bookmark page;
determining if a drag and touch up is input in the left/right direction in a state where the touch down is input for the clip whose bookmark page has been displayed; and
when the drag and touch up is input in the left/right direction in the state where the touch down is input for the clip whose bookmark page has been displayed, moving to the bookmark page corresponding to the previously added bookmark.

Thus, in certain embodiments, depending on the direction of the drag, a virtual page turn is performed, either to the immediately preceding or immediately following bookmarked page.

In certain embodiments, the method further comprises:
determining if a touch down is input for a clip corresponding to a previously added bookmark in the e-book and then, in a state where the touch down is input, a drag and touch up is input in the upward direction; and
when the touch down is input for the clip corresponding to the previously added bookmark in the e-book and then, in the state where the touch down is input, the drag and touch up is input in the upward direction, deleting a clip corresponding to the previously added bookmark.

A portable terminal comprising an e-book viewer and a display unit wherein the e-book viewer is arranged to carry out a method according to any of the claims 1 to claim 12 is also provided.

According to a second aspect of the invention, there is provided a method for turning electronic book (e-book) pages, the method comprising:
executing an e-book with a portable terminal having a touch sensitive screen for displaying pages of the e-book;
displaying a page of the e-book on said screen;
detecting a touch on the screen followed by a drag to the left or right, and a release;
displaying the next page of the e-book on the screen if the drag is to the left; and
displaying the preceding page of the e-book on the screen if the drag is to the right.

A portable terminal comprising an e-book viewer and a display unit wherein the e-book viewer is arranged to carry out a method according to the claim 14 is also provided.

Embodiments of this second aspect may additionally incorporate any of the features of the first aspect of the invention or its embodiments.

According to another aspect of the invention there is provided apparatus arranged to implement a method in accordance with any one of the above-described aspects, or any embodiment thereof.

According to another aspect of the present invention, an apparatus for turning e-book pages in a portable terminal having an e-book function is provided. The apparatus includes an e-book viewer and a display unit. The e-book viewer executes an e-book. The e-book viewer determines if a touch down (e.g. on a touch sensitive input means, such as a touch sensitive screen displaying the e-book pages) is input more left than a predetermined right UI activation region of the e-book and then, in a state where the touch down is input, a drag and touch up is input in the right direction. When the touch down is input more left than the predetermined right UI activation region of the e-book and then, in the state where the touch down is input, the drag and touch up is input in the right direction, the e-book viewer controls the display unit to display the just preceding page on a screen. The display unit displays, on the screen, a corresponding page of the e-book according to the control of the e-book viewer.

As will be appreciated, in certain embodiments the e-book viewer comprises a processor adapted to execute an e-book application or program.

Another aspect of the invention provides a computer program comprising instructions arranged, when executed, to implement a method and/or apparatus in accordance with any one of the above-described aspects. A further aspect provides machine-readable storage storing such a program.

### BRIEF DESCRIPTION OF THE DRAWINGS

The above and other objects, features and advantages of the present invention will become more apparent from the following detailed description when taken in conjunction with the accompanying drawings in which:
FIG. 1 is a block diagram illustrating an apparatus construction of a portable terminal having an electronic book (e-book) function according to the present invention;
FIG. 2 is an example diagram illustrating a method for turning an e-book by one page in an analog manner in a portable terminal having an e-book function according to an exemplary embodiment of the present invention;
FIG. 3 is a flowchart illustrating a method for turning an e-book by one page in an analog manner in a portable terminal having an e-book function according to an exemplary embodiment of the present invention;
FIG. 4 is an example diagram illustrating a method for turning an e-book by several pages in an analog manner in a portable terminal having an e-book function according to an exemplary embodiment of the present invention;
FIGS. 5A and 5B are a flowchart illustrating a method for turning an e-book by several pages in an analog manner in a portable terminal having an e-book function according to an exemplary embodiment of the present invention;
FIG. 6 is an example diagram illustrating a method for supporting a bookmark for an e-book in a portable terminal having an e-book function according to an exemplary embodiment of the present invention; and
FIGS. 7A and 7B are a flowchart illustrating a method for supporting a bookmark for an e-book in a portable terminal having an e-book function according to an exemplary embodiment of the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail. And, terms described below, which are defined considering functions in the present invention, can be different depending on user and operator's intention or practice. Therefore, the terms should be defined on the basis of the disclosure throughout this specification.

Exemplary embodiments of the present invention provide a way of turning electronic book (e-book) pages in an analog manner in a portable terminal having an e-book function.

In the following description, portable terminals are meaning inclusive of all of a cellular phone with a touch panel, a Personal Communication System (PCS), a Personal Data Assistant (PDA), an International Mobile Telecommunication - 2000 (IMT-2000) terminal and the like. The following description is made using general constructions of the examples.

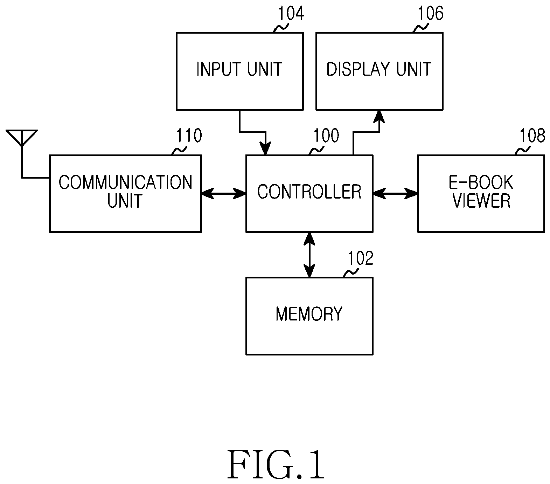

FIG. 1 is a block diagram illustrating an apparatus construction of a portable terminal having an e-book function according to the present invention.

As illustrated in FIG. 1, the portable terminal includes a controller 100, a memory 102, an input unit 104, a display unit 106, an e-book viewer 108, and a communication unit 110.

Referring to FIG. 1, the controller 100 controls a general operation of the portable terminal, and processes a function of turning e-book pages in an analog manner according to the present invention.

The memory 102 stores a microcode of a program for processing and controlling the controller 100 and a variety of reference data, temporary data generated in execution of a variety of programs, and a diversity of updateable depository data. Particularly, the memory 102 stores a program for turning e-book pages in an analog manner according to the present invention.

The input unit 104 has numeral key buttons and a plurality of function key buttons. The input unit 104 provides key button input data corresponding to a key button pressed by a user to the controller 100.

The display unit 106 displays state information generated during operation of the portable terminal, limited number of characters, a large amount of moving pictures and still pictures and the like. In addition to common functions, according to the present invention, the display unit 106 is formed in a form of a touch panel and performs a function of the input unit 104. That is, the display unit 106 senses a user's touch input and transmits the sensed touch input to the controller 100.

The e-book viewer 108 performs a role of turning an e-book by one page / by several pages in an analog manner such that a user can convert pages of contents naturally with a feeling as if he/she really turns a book. Further, the e-book viewer 108 supports a bookmark for the e-book.

The communication unit 110 performs a function of transmitting/receiving and processing a wireless signal input/output through an antenna. For example, in a transmission mode, the communication unit 110 performs a function of processing original data through channel coding and spreading, converting the original data into a Radio Frequency (RF) signal, and transmitting the RF signal. In a reception mode, the communication unit 110 performs a function of processing a received RF signal through de-spreading and channel decoding, and restoring the signal to original data.

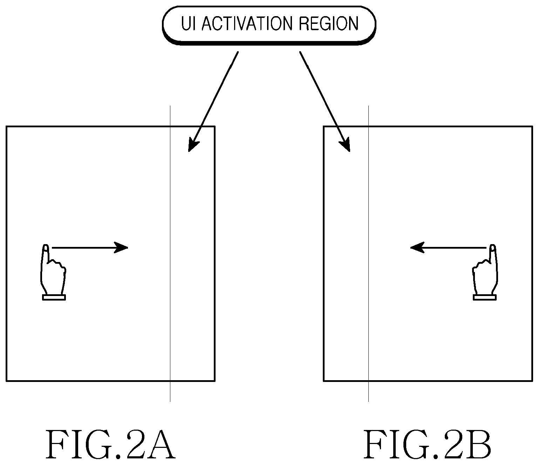

FIG. 2 is an example diagram illustrating a method for turning an e-book by one page in an analog manner in a portable terminal having an e-book function according to an exemplary embodiment of the present invention.

Referring to FIG. 2, the terminal executes the e-book function, and displays, on a screen, a preset page of an e-book selected by a user. Here, a right partial region of the screen is defined as a right UI activation region, and a left partial region of the screen is defined as a left UI activation region. Here, the right UI activation region and the left UI activation region are preset suitable to a corresponding terminal.

As in FIG. 2A, if a touch down is input more left than the predetermined right UI activation region of the e-book and then, in a state where the touch down is input, a drag and touch up is input in the right direction, the terminal displays the just preceding page on the screen. As in FIG. 2B, if a touch down is input more right than the predetermined left UI activation region of the e-book and then, in a state where the touch down is input, a drag and touch up is input in the left direction, the terminal displays the just next page on the screen.

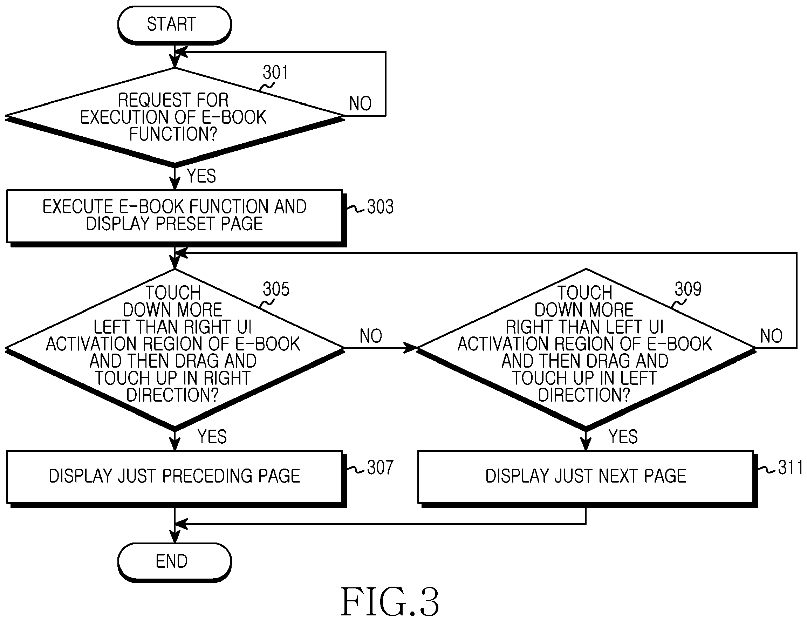

FIG. 3 is a flowchart illustrating a method for turning an e-book by one page in an analog manner in a portable terminal having an e-book function according to an exemplary embodiment of the present invention.

Referring to FIG. 3, in step 301, the terminal determines if a request for execution of an e-book function is sensed according to user's key manipulation.

When it is determined in step 301 that the request for execution of the e-book function is sensed, in step 303, the terminal executes the e-book function and, according to setting information of the e-book function, displays a preset page of an e-book selected by a user. For example, the setting information of the e-book function can be preset to display the first page of a corresponding e-book or display the previously last displayed page of the corresponding e-book at the time of execution of the e-book function.

After that, in step 305, the terminal determines if a touch down is input more left than a predetermined right UI activation region of the e-book and then, in a state where the touch down is input, a drag and touch up is input in the right direction.

When it is determined in step 305 that the touch down is input more left than the predetermined right UI activation region of the e-book and then, in the state where the touch down is input, the drag and touch up is input in the right direction, in step 307, the terminal displays the just preceding page on the screen.

In contrast, when it is not determined in step 305 that the touch down is input more left than the predetermined right UI activation region of the e-book and then, in the state where the touch down is input, the drag and touch up is input in the right direction, in step 309, the terminal determines if a touch down is input more right than a predetermined left UI activation region of the e-book and then, in a state where the touch down is input, a drag and touch up is input in the left direction.

When it is determined in step 309 that the touch down is input more right than the predetermined left UI activation region of the e-book and then, in the state where the touch down is input, the drag and touch up is input in the left direction, in step 311, the terminal displays the just next page on the screen.

In contrast, when it is not determined in step 309 that the touch down is input more right than the predetermined left UI activation region of the e-book and then, in the state where the touch down is input, the drag and touch up is input in the left direction, the terminal returns to step 305 and repeatedly performs the subsequent steps.

After that, the terminal terminates the algorithm according to the exemplary embodiment of the present invention.

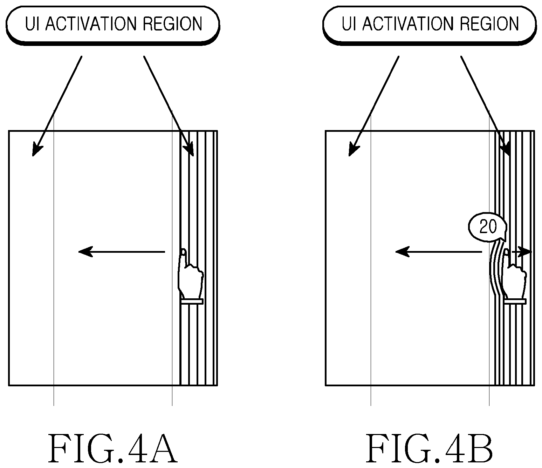

FIG. 4 is an example diagram illustrating a method for turning an e-book by several pages in an analog manner in a portable terminal having an e-book function according to an exemplary embodiment of the present invention.

Referring to FIG. 4, the terminal executes the e-book function, and displays, on a screen, a preset page of an e-book selected by a user. Here, a right partial region of the screen is defined as a right UI activation region, and a left partial region of the screen is defined as a left UI activation region. Here, the right UI activation region and the left UI activation region are preset suitable to a corresponding terminal.

If a touch down is input in the predetermined right UI activation region of the e-book, the terminal displays the right side of the e-book. At this time, as in FIG. 4A, if a drag and touch up is input in the left direction in a state where the touch down is input in the predetermined right UI activation region, the terminal displays the just next page on the screen. In contrast, as in FIG. 4B, if a drag is input in the right direction in a state where the touch down is input in the predetermined right UI activation region, the terminal displays the number of pages increasing as much as the dragging on the right side of the e-book and, if a drag and touch up is input in the left direction in a state where the drag is input in the right direction, the terminal displays a next page corresponding to the number of the increased pages.

Although not illustrated, if a touch down is input in the predetermined left UI activation region of the e-book, the terminal displays the left side of the e-book. At this time, if a drag and touch up is input in the right direction in a state where the touch down is input in the predetermined left UI activation region, the terminal displays the just preceding page on the screen. In contrast, if a drag is input in the left direction in the state where the touch down is input in the predetermined left UI activation region, the terminal displays the number of pages decreasing as much as the dragging on the left side of the e-book and, if a drag and touch up is input in the right direction in a state where the drag is input in the left direction, the terminal displays a preceding page corresponding to the number of the decreased pages.

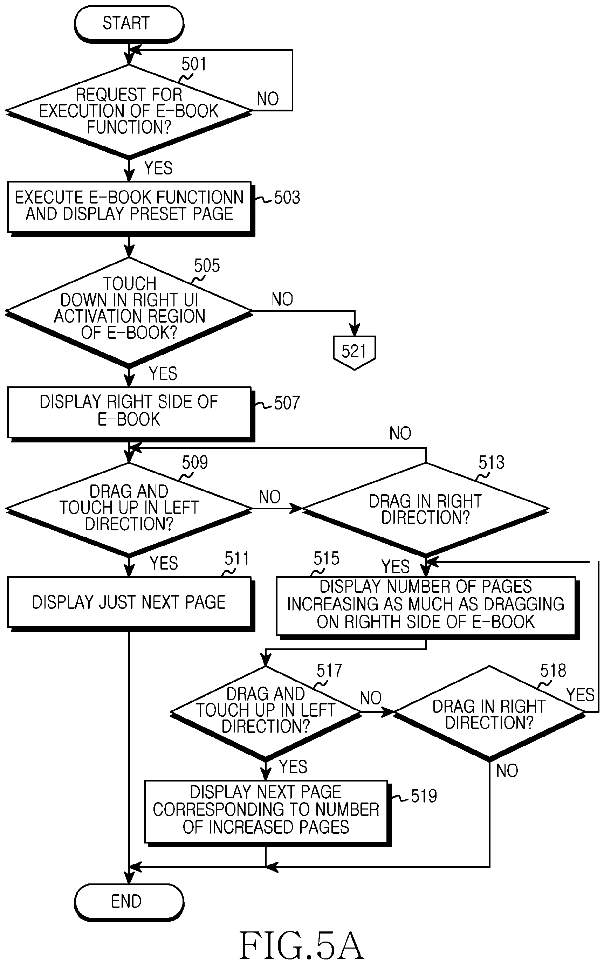

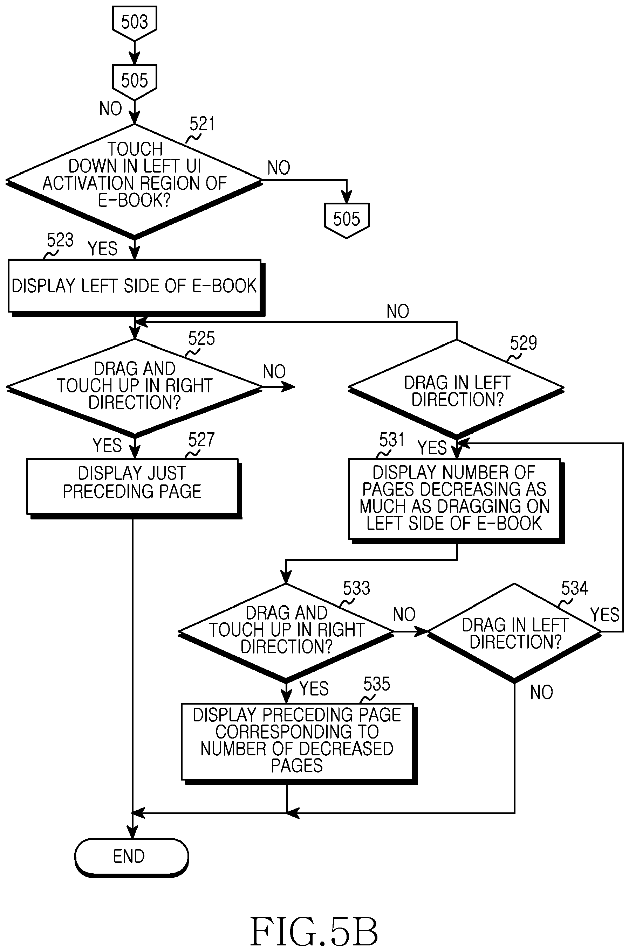

FIGS. 5A and 5B are a flowchart illustrating a method for turning an e-book by several pages in an analog manner in a portable terminal having an e-book function according to an exemplary embodiment of the present invention.

Referring to FIGS. 5A and 5B, in step 501, the terminal determines if a request for execution of an e-book function is sensed according to user's key manipulation.

When it is determined in step 501 that the request for execution of the e-book function is sensed, in step 503, the terminal executes the e-book function and, according to setting information of the e-book function, displays a preset page of an e-book selected by a user. For example, the setting information of the e-book function can be preset to display the first page of a corresponding e-book or display the previously last displayed page of the corresponding e-book at the time of execution of the e-book function.

After that, in step 505, the terminal determines if a touch down is input in a predetermined right UI activation region of the e-book.

When it is determined in step 505 that the touch down is input in the predetermined right UI activation region of the e-book, in step 507, the terminal displays the right side of the e-book, and proceeds to step 509.

Next, in step 509, the terminal determines if a drag and touch up is input in the left direction in a state where the touch down is input in the predetermined right UI activation region.

When it is determined in step 509 that the drag and touch up is input in the left direction in the state where the touch down is input in the predetermined right UI activation region, in step 511, the terminal displays the just next page on the screen.

In contrast, when it is not determined in step 509 that the drag and touch up is input in the left direction in the state where the touch down is input in the predetermined right UI activation region, in step 513, the terminal determines if a drag is input in the right direction in the state where the touch down is input in the predetermined right UI activation region.

When it is determined in step 513 that the drag is input in the right direction in the state where the touch down is input in the predetermined right UI activation region, in step 515, the terminal displays the number of pages increasing as much as the dragging on the right side of the e-book and then, proceeds to step 517. Here, the number of pages displayed on the right side increases more and more fast according to the dragging.

After that, in step 517, the terminal determines if a drag and touch up is input in the left direction in the state where the drag is input in the right direction.

When it is determined in step 517 that the drag and touch up is input in the left direction in the state where the drag is input in the right direction, in step 519, the terminal displays a next page corresponding to the number of the increased pages.

When it is determined in step 517 that the drag and touch up is not input in the left direction in the state where the drag is input in the right direction, in step 518, the terminal determines if, in the state where the drag is input in the right direction, a drag is continuously input in the right direction.

When it is determined in step 518 that, in the state where the drag is input in the right direction, the drag is continuously input in the right direction, the terminal returns to step 515 and repeatedly performs the subsequent steps.

In contrast, when it is determined in step 518 that, in the state where the drag is input in the right direction, the drag is not continuously input in the right direction, the terminal terminates the algorithm according to the exemplary embodiment of the present invention. For example, in the state where the drag is input in the right direction, when a touch up is input without a drag of the left direction or right direction, the terminal terminates the algorithm according to the exemplary embodiment of the present invention.

In contrast, when it is determined in step 513 that the drag is not input in the right direction in the state where the touch down is input in the predetermined right UI activation region, the terminal returns to step 509 and repeatedly performs the subsequent steps.

In contrast, when it is determined in step 505 that the touch down is not input in the predetermined right UI activation region of the e-book, in step 521, the terminal determines if a touch down is input in a predetermined left UI activation region of the e-book.

When it is determined in step 521 that the touch down is input in the predetermined left UI activation region of the e-book, in step 523, the terminal displays the left side of the e-book, and proceeds to step 525.

After that, in step 525, the terminal determines if a drag and touch up is input in the right direction in the state where the touch down is input in the predetermined left UI activation region.

When it is determined in step 525 that the drag and touch up is input in the right direction in the state where the touch down is input in the predetermined left UI activation region, in step 527, the terminal displays the just preceding page on the screen.

In contrast, when it is determined in step 525 that the drag and touch up is not input in the right direction in the state where the touch down is input in the predetermined left UI activation region, in step 529, the terminal determines if a drag is input in the left direction in the state where the touch down is input in the predetermined left UI activation region.

When it is determined in step 529 that the drag is input in the left direction in the state where the touch down is input in the predetermined left UI activation region, in step 531, the terminal displays the number of pages decreasing as much as the dragging on the left side of the e-book and then, proceeds to step 533. Here, the number of pages displayed on the left side decreases more and more fast according to the dragging.

Next, in step 533, the terminal determines if a drag and touch up is input in the right direction in the state where the drag is input in the left direction.

When it is determined in step 533 that the drag and touch up is input in the right direction in the state where the drag is input in the left direction, in step 535, the terminal displays a preceding page corresponding to the number of the decreased pages.

In contrast, when it is determined in step 533 that the drag and touch up is not input in the right direction in the state where the drag is input in the left direction, in step 534, the terminal determines if, in the state where the drag is input in the left direction, a drag is continuously input in the left direction.

When it is determined in step 534 that, in the state where the drag is input in the left direction, the drag is continuously input in the left direction, the terminal returns to step 531 and repeatedly performs the subsequent steps.

In contrast, when it is determined in step 534 that, in the state where the drag is input in the left direction, the drag is not continuously input in the left direction, the terminal terminates the algorithm according to the exemplary embodiment of the present invention. For instance, in the state where the drag is input in the left direction, when a touch up is input without a drag of the left direction or right direction, the terminal terminates the algorithm according to the exemplary embodiment of the present invention.

In contrast, when it is determined in step 529 that the drag is not input in the left direction in the state where the touch down is input in the predetermined left UI activation region, the terminal returns to step 525 and repeatedly performs the subsequent steps.

In contrast, when it is determined in step 521 that the touch down is not input in the predetermined left UI activation region of the e-book, the terminal returns to step 505 and repeatedly performs the subsequent steps.

After that, the terminal terminates the algorithm according to the exemplary embodiment of the present invention.

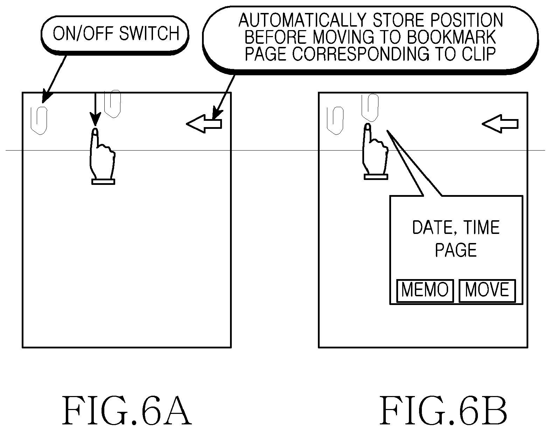

FIG. 6 is an example diagram illustrating a method for supporting a bookmark for an e-book in a portable terminal having an e-book function according to an exemplary embodiment of the present invention.

Referring to FIG. 6, the terminal executes the e-book function and displays, on a screen, a preset page of an e-book selected by a user. After that, the terminal touches a bookmark On/Off switch to activate a bookmark function. At this time, an upper partial region of the screen is defined as an upper UI activation region, and the upper UI activation region is preset suitable to a corresponding terminal. The bookmark On/Off switch for activation/deactivation of the bookmark function can be positioned left in the predetermined upper UI activation region of the e-book. For example, the bookmark On/Off switch can be displayed in a clip shape. Further, a menu for automatically storing a position before moving to a bookmark page corresponding to a clip can be positioned right in the predetermined upper UI activation region of the e-book. For example, the menu can be displayed in an arrow shape.

As in FIG. 6A, if a touch down is input in the predetermined upper UI activation region of the e-book and then, in a state where the touch down is input, a drag is input in the downward direction, the terminal determines that there is a request for addition of a bookmark, and generates a clip corresponding to a bookmark to be added. Here, a position of the clip can move along a drag direction until before a touch up is input in a state where the drag is input in the downward direction. After that, if a touch up is input in the state where the drag is input in the downward direction, the terminal positions the generated clip in a position where the touch up is input. Here, a shape, color and the like of the generated clip can be set according to preset information. As a different method, the terminal may position the generated clip in a position where the touch up is input and simultaneously, display an input window through a popup window, receive an input of information of a shape, color and the like of the generated clip from a user, and change the shape, color and the like of the generated clip according to the received information.

As in FIG. 6B, if a touch down is input for a clip corresponding to a previously added bookmark, the terminal displays a corresponding bookmark page. If a long touch is sensed for the clip corresponding to the previously added bookmark, whose bookmark page has been displayed, the terminal determines that there is a request for displaying of information on the previously added bookmark, and displays the information on the previously added bookmark through a popup window. Here, the long touch represents a continuous touch for one or two seconds, and the information on the bookmark can include information of a generation date of the bookmark, a generation time, a bookmark page and the like. Further, the popup window can display not only information on a corresponding bookmark but also a memo menu for memo composition and a move menu for position change of the bookmark. In this case, if the memo menu is selected from a user, the terminal can display a memo window and receive an input of memos to be written about the bookmark. If the move menu is selected from the user, the terminal can perform a bookmark position change mode and receive an input of a changed position of a clip corresponding to the bookmark.

Although not illustrated, if a touch down is input for a clip corresponding to a previously added bookmark, the terminal displays a corresponding bookmark page. If a drag and touch up is input in the left/right direction in a state where the touch down is input for the clip corresponding to the previously added bookmark, whose bookmark page has been displayed, the terminal determines that there is a request for movement to the bookmark page corresponding to the previously added bookmark, and moves to the bookmark page.

Although not illustrated, if a touch down is input for a clip corresponding to a previously added bookmark and then, in a state where the touch down is input, a drag and touch up is input in the upward direction, the terminal determines that there is a request for deletion of the previously added bookmark, and deletes a clip corresponding to the previously added bookmark.

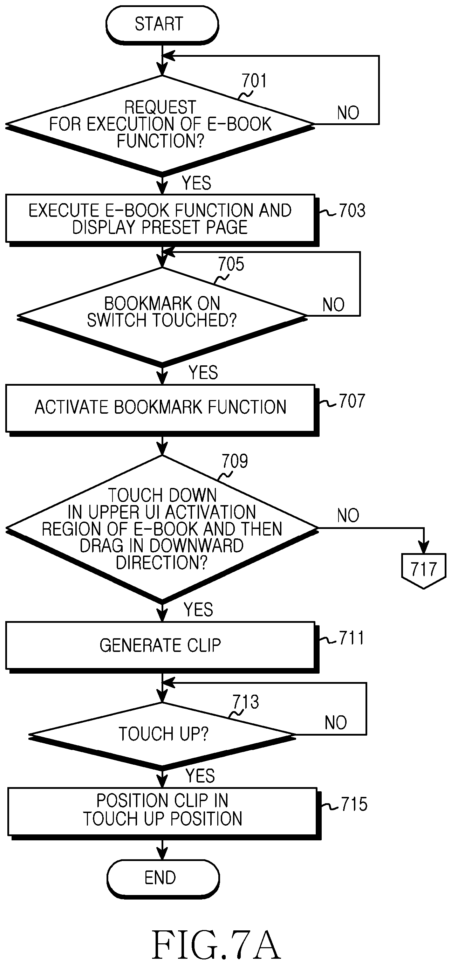

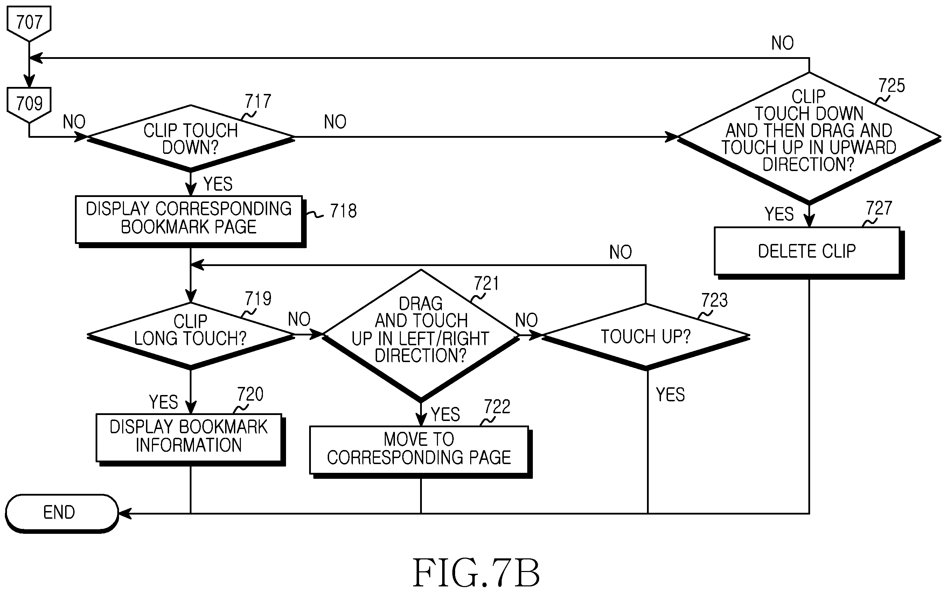

FIGS. 7A and 7B are a flowchart illustrating a method for supporting a bookmark for an e-book in a portable terminal having an e-book function according to an exemplary embodiment of the present invention.

Referring to FIGS. 7A and 7B, in step 701, the terminal determines if a request for execution of an e-book function is sensed according to user's key manipulation.

When it is determined in step 701 that the request for execution of the e-book function is sensed, in step 703, the terminal executes the e-book function and, according to setting information of the e-book function, displays a preset page of an e-book selected by a user. For example, the setting information of the e-book function can be preset to display the first page of a corresponding e-book or display the previously last displayed page of the corresponding e-book at the time of execution of the e-book function.

Next, in step 705, the terminal determines if a bookmark On switch is touched (i.e., touch up after touch down). Here, the bookmark On switch can be, for example, positioned left in a predetermined upper UI activation region of the e-book, and can be displayed in a clip shape. According to another exemplary embodiment of the present invention, the bookmark On switch may be realized as one switch performing all of the function of a bookmark On switch and the function of a bookmark Off switch. In this case, in a case where the switch is touched in a bookmark Off state, the switch can transit to a bookmark On state to activate a bookmark function. In a case where the switch is touched in the bookmark On state, the switch can transit to the bookmark Off state to deactivate the bookmark function.

When it is determined in step 705 that the bookmark On switch is touched, in step 707, the terminal activates the bookmark function and then, proceeds to step 709.

Next, in step 709, the terminal determines if a touch down is input in the predetermined upper UI activation region of the e-book and then, in a state where the touch down is input, a drag is input in the downward direction.

When it is determined in step 709 that the touch down is input in the predetermined upper UI activation region of the e-book and then, in the state where the touch down is input, the drag is input in the downward direction, the terminal determines that there is a request for addition of a bookmark and, in step 711, generates a clip corresponding to a bookmark to be added and proceeds to step 713. Here, a position of the clip can move along a drag direction until before a touch up is input in a state where the drag is input in the downward direction.

Next, in step 713, the terminal determines if a touch up is input in the state where the drag is input in the downward direction.

When it is determined in step 713 that the touch up is input in the state where the drag is input in the downward direction, in step 715, the terminal positions the generated clip in a position where the touch up is input, and terminates the algorithm according to the exemplary embodiment of the present invention. Here, a shape, color and the like of the generated clip can be set according to preset information. As a different method, the terminal may position the generated clip in the position where the touch up is input and simultaneously, display an input window through a popup window, receive an input of information of the shape, color and the like of the generated clip from a user, and change the shape, color and the like of the generated clip according to the received information.

In contrast, when it is determined in step 709 that the touch down is input in the predetermined upper UI activation region of the e-book and then, in the state where the touch down is input, the drag is not input in the downward direction, in step 717, the terminal determines if a touch down is input for a clip corresponding to a previously added bookmark.

When it is determined in step 717 that the touch down is input for the clip corresponding to the previously added bookmark, in step 718, the terminal displays a corresponding bookmark page, and proceeds to step 719.

Next, in step 719, the terminal determines if a long touch is sensed for the clip corresponding to the previously added bookmark, whose bookmark page has been displayed. Here, the long touch represents a continuous touch for one or two seconds, for example.

When it is determined in step 719 that the long touch is sensed for the clip corresponding to the previously added bookmark, whose bookmark page has been displayed, the terminal determines that there is a request for displaying of information on the previously added bookmark, whose bookmark page has been displayed and, in step 720, displays the information on the previously added bookmark through a popup window and terminates the algorithm according to the exemplary embodiment of the present invention. Here, the information on the bookmark can include information of a generation date of the bookmark, a generation time, a bookmark page and the like. Further, the popup window can display not only information on a corresponding bookmark but also a memo menu for memo composition and a move menu for position change of a corresponding bookmark. In this case, if the memo menu is selected from a user, the terminal can display a memo window and receive an input of memos to be written about the bookmark. If the move menu is selected from the user, the terminal can perform a bookmark position change mode and receive an input of a changed position of a clip corresponding to the bookmark.

In contrast, when it is determined in step 719 that the long touch is not sensed for the clip corresponding to the previously added bookmark, whose bookmark page has been displayed, in step 721, the terminal determines if a drag and touch up is input in the left/right direction in a state where the touch down is input for the clip corresponding to the previously added bookmark.

When it is determined in step 721 that the drag and touch up is input in the left/right direction in the state where the touch down is input for the clip corresponding to the previously added bookmark, the terminal determines that there is a request for movement to the bookmark page corresponding to the previously added bookmark, which has been displayed and, in step 722, moves to the bookmark page and terminates the algorithm according to the exemplary embodiment of the present invention.

In contrast, when it is determined in step 721 that the drag and touch up is not input in the left/right direction in the state where the touch down is input for the clip corresponding to the previously added bookmark, in step 723, the terminal determines if a touch up is input in the state where the touch down is input for the clip corresponding to the previously added bookmark.

When it is determined in step 723 that the touch up is input in the state where the touch down is input for the clip corresponding to the previously added bookmark, the terminal terminates the algorithm according to the exemplary embodiment of the present invention.

In contrast, when it is determined in step 723 that the touch up is not input in the state where the touch down is input for the clip corresponding to the previously added bookmark, the terminal returns to step 719 and repeatedly performs the subsequent steps.

In contrast, when it is determined in step 717 that the touch down is not input for the clip corresponding to the previously added bookmark, in step 725, the terminal determines if a touch down is input for a clip corresponding to a previously added bookmark and then, in a state where the touch down is input, a drag and touch up is input in the upward direction (e.g., till the end of the upward direction).

When it is determined in step 725 that the touch down is input for the clip corresponding to the previously added bookmark and then, in the state where the touch down is input, the drag and touch up is input in the upward direction, the terminal determines that there is a request for deletion of the previously added bookmark and, in step 727, the terminal deletes the clip corresponding to the previously added bookmark and terminates the algorithm according to the exemplary embodiment of the present invention.

In contrast, when it is determined in step 725 that the touch down is input for the clip corresponding to the previously added bookmark and then, in the state where the touch down is input, the drag and touch up is not input in the upward direction, the terminal returns to step 709 and repeatedly performs the subsequent steps.

Next, the terminal terminates the algorithm according to the exemplary embodiment of the present invention.

As described above, exemplary embodiments of the present invention have an advantage that, although not learning an equipment use method, a user can convert pages of contents naturally with a feeling as if he/she really turns a book, by providing a UI of turning e-book pages in an analog manner in a portable terminal having an e-book function.

It will be appreciated that embodiments of the present invention can be realized in the form of hardware, software or a combination of hardware and software. Any such software may be stored in the form of volatile or nonvolatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

## Claims

1. A method for turning electronic book, e-book, pages in a portable terminal having an e-book function, the method comprising:
executing (303) an e-book;
in response to determination (505) that a touch down is input in a predetermined right User Interface, UI,
activation region of the e-book,
if a drag and touch up is input in a left direction, displaying (511) the just next page on a screen, and
if a drag is input in a right direction in the state where the touch down is input in the predetermined right UI activation region, displaying (515) the number of pages increasing as much as the dragging on a right side of the e-book; and
in response to determination (521) that a touch down is input in a predetermined left UI activation region of the e-book,
if a drag and touch up is input in a right direction, displaying (527) the just preceding page on the screen, and
if a drag is input in a left direction in the state where the touch down is input in the predetermined left UI activation region, displaying (531) the number of pages decreasing as much as the dragging on the left side of the e-book.

2. The method of claim 1, further comprising:
when the touch down is input in the predetermined right UI activation region of the e-book, displaying (507) the right side of the e-book; and
when the touch down is input in the predetermined left UI activation region of the e-book, displaying (523) the left side of the e-book.

3. The method of claim 1, wherein a right partial region of the screen is defined as a right UI activation region, and a left partial region of the screen is defined as a left UI activation region.

4. The method of claim 1, wherein displaying (515) the number of pages increasing as much as the dragging on a right side of the e-book comprising:
if a a drag and a touch up is input in the left direction in the state where the drag is input in the right direction, displaying (519) a next page corresponding to the number of the increased pages.

5. The method of claim 1, wherein displaying (515) the number of pages decreasing as much as the dragging on the left side of the e-book comprising:
if a drag and touch up is input in the right direction in the state where the drag is input in the left direction, displaying (535) a preceding page corresponding to the number of the decreased pages.

6. The method of claim 1, further comprising:
determining (705) if a bookmark On switch is touched in a predetermined upper UI activation region of the e-book; and
when the bookmark On switch is touched in the predetermined upper UI activation region of the e-book, activating (707) a bookmark function.

7. The method of claim 6, further comprising:
determining (709) if a touch down is input in the predetermined upper UI activation region of the e-book and then, in a state where the touch down is input, a drag is input in the downward direction;
when the touch down is input in the predetermined upper UI activation region of the e-book and then, in the state where the touch down is input, the drag is input in the downward direction, generating (711) a clip corresponding to a bookmark to be added;
determining (713) if a touch up is input in the state where the drag is input in the downward direction; and
when the touch up is input in the state where the drag is input in the downward direction, positioning (715) the generated clip in a position where the touch up is input.

8. The method of claim 6, further comprising:
determining (717) if a touch down is input for a clip corresponding to a previously added bookmark in the e-book;
when the touch down is input for the clip corresponding to the previously added bookmark in the e-book, displaying (718) a corresponding bookmark page;
determining (719) if a long touch is sensed for the clip whose bookmark page has been displayed; and
when the long touch is sensed for the clip whose bookmark page has been displayed, displaying (720) information on the previously added bookmark.

9. The method of claim 6, further comprising:
determining (717) if a touch down is input for a clip corresponding to a previously added bookmark in the e-book;
when the touch down is input for the clip corresponding to the previously added bookmark in the e-book, displaying (718) a corresponding bookmark page;
determining (721) if a drag and touch up is input in the left/right direction in a state where the touch down is input for the clip whose bookmark page has been displayed; and
when the drag and touch up is input in the left/right direction in the state where the touch down is input for the clip whose bookmark page has been displayed, moving (722) to the bookmark page corresponding to the previously added bookmark.

10. The method of claim 6, further comprising:
determining (725) if a touch down is input for a clip corresponding to a previously added bookmark in the e-book and then, in a state where the touch down is input, a drag and touch up is input in the upward direction; and
when the touch down is input for the clip corresponding to the previously added bookmark in the e-book and then, in the state where the touch down is input, the drag and touch up is input in the upward direction, deleting (727) a clip corresponding to the previously added bookmark.

11. A portable terminal comprising an e-book viewer (108) and a display unit (106) wherein the e-book viewer (108) is arranged to carry out a method according to any of the claims 1 to claim 10.

## Patentansprüche

1. Verfahren zum Umblättern von Seiten eines elektronischen Buchs, E-Book, in einem tragbaren Endgerät mit einer E-Book-Funktion, wobei das Verfahren aufweist:
ein Ausführen (303) eines E-Book;
in Reaktion auf eine Bestimmung (505), dass eine Abwärtsberührung in einem vorbestimmten rechten Benutzeroberflächen-, UI, Aktivierungsbereich eines E-Book eingegeben wird, wenn eine Zieh- und Aufwärtsberührung in einer Linksrichtung eingegeben wird, ein Anzeigen (511) der genau nächsten Seite auf einem Bildschirm, und wenn ein Ziehen in einer Rechtsrichtung in dem Zustand eingegeben wird, in dem die Abwärtsberührung in dem vorbestimmten rechten UI-Aktivierungsbereich eingegeben wird, ein Anzeigen (515) der Anzahl von Seiten, die sich um genauso viel erhöht wie das Ziehen auf einer rechten Seite des E-Book;
und in Reaktion auf eine Bestimmung (521), dass eine Abwärtsberührung in einem vorbestimmten linken UI-Aktivierungsbereich des E-Book eingegeben wird, wenn eine Zieh- und Aufwärtsberührung in einer Rechtsrichtung eingegeben wird, ein Anzeigen (527) der genau vorherigen Seite auf dem Bildschirm, und wenn ein Ziehen in einer Linksrichtung in dem Zustand eingegeben wird, in dem die Abwärtsberührung in dem vorbestimmten linken UI-Aktivierungsbereich eingegeben wird, ein Anzeigen (531) der Anzahl von Seiten, die sich um genauso viel verringert wie das Ziehen auf einer linken Seite des E-Book.

2. Verfahren nach Anspruch 1, ferner aufweisend:
wenn die Abwärtsberührung in dem vorbestimmten rechten UI-Aktivierungsbereich des E-Book eingegeben wird, ein Anzeigen (507) der rechten Seite des E-Book; und wenn die Abwärtsberührung in dem vorbestimmten linken UI-Aktivierungsbereich des E-Book eingegeben wird, ein Anzeigen (523) der linken Seite des E-Book.

3. Verfahren nach Anspruch 1, wobei ein rechter Teilbereich des Bildschirms als ein rechter UI-Aktivierungsbereich definiert ist, und ein linker Teilbereich des Bildschirms als ein linker UI-Aktivierungsbereich definiert ist.

4. Verfahren nach Anspruch 1, wobei ein Anzeigen (515) der Anzahl von Seiten, die sich um genauso viel erhöht wie das Ziehen auf einer rechten Seite des E-Book aufweist:
wenn ein Ziehen und eine Aufwärtsberührung in der Linksrichtung in dem Zustand eingegeben werden, in dem das Ziehen in der Rechtsrichtung eingegeben wird, ein Anzeigen (519) einer nächsten Seite, die der Anzahl der Seiten entspricht, um die erhöht wurde.

5. Verfahren nach Anspruch 1, wobei ein Anzeigen (515) der Anzahl von Seiten, die sich um genauso viel verringert wie das Ziehen auf der linken Seite des E-Book aufweist:
wenn eine Zieh- und Aufwärtsberührung in der Rechtsrichtung in dem Zustand eingegeben werden, in dem das Ziehen in der Linksrichtung eingegeben wird, ein Anzeigen (535) einer vorhergehenden Seite, die der Anzahl der Seiten entspricht, um die verringert wurde.

6. Verfahren nach Anspruch 1, ferner aufweisend:
ein Bestimmen (705), ob ein Lesezeichen-Einschalter in einem vorbestimmten oberen UI-Aktivierungsbereich des E-Book berührt wird; und
wenn der Lesezeichen-Einschalter in dem vorbestimmten oberen UI-Aktivierungsbereich des E-Book berührt wird, ein Aktivieren (707) einer Lesezeichenfunktion.

7. Verfahren nach Anspruch 6, ferner aufweisend:
ein Bestimmen (709), ob eine Abwärtsberührung in dem vorbestimmten oberen UI-Aktivierungsbereich des E-Book eingegeben wird, und anschließend in einem Zustand, in dem die Abwärtsberührung eingegeben wird, ein Ziehen in der Abwärtsrichtung eingegeben wird;
wenn die Abwärtsberührung in dem vorbestimmten oberen UI-Aktivierungsbereich des E-Book eingegeben wird, und anschließend in dem Zustand, in dem die Abwärtsberührung eingegeben wird, das Ziehen in der Abwärtsrichtung eingegeben wird, ein Generieren (711) einer Klammer, die einem Lesezeichen entspricht, das hinzugefügt werden soll;
ein Bestimmen (713), ob eine Aufwärtsberührung in dem Zustand eingegeben wird, in dem das Ziehen in der Abwärtsrichtung eingegeben wird; und
wenn die Aufwärtsberührung in dem Zustand eingegeben wird, in dem das Ziehen in der Abwärtsrichtung eingegeben wird, ein Positionieren (715) der generierten Klammer in einer Position, an der die Aufwärtsbewegung eingegeben wird.

8. Verfahren nach Anspruch 6, ferner aufweisend:
ein Bestimmen (717), ob eine Abwärtsberührung für eine Klammer eingegeben wird, die einem vorher hinzugefügten Lesezeichen in dem E-Book entspricht;
wenn die Abwärtsberührung für die Klammer eingegeben wird, die dem vorher hinzugefügten Lesezeichen in dem E-Book entspricht, ein Anzeigen (718) einer entsprechenden Lesezeichen-Seite;
ein Bestimmen (719), ob eine lange Berührung für die Klammer erfasst wird, deren Lesezeichen-Seite angezeigt worden ist; und
wenn die lange Berührung für die Klammer erfasst wird, deren Lesezeichen-Seite angezeigt worden ist, ein Anzeigen (720) von Informationen über das vorher hinzugefügte Lesezeichen.

9. Verfahren nach Anspruch 6, ferner aufweisend:
ein Bestimmen (717), ob eine Abwärtsberührung für eine Klammer eingegeben wird, die einem vorher hinzugefügten Lesezeichen in dem E-Book entspricht;
wenn die Abwärtsberührung für die Klammer eingegeben wird, die dem vorher hinzugefügten Lesezeichen in dem E-Book entspricht, ein Anzeigen (718) einer entsprechenden Lesezeichen-Seite;
ein Bestimmen (721), ob eine Zieh- und Aufwärtsberührung in der Links-/Rechtsrichtung in einem Zustand eingegeben wird, in dem die Abwärtsberührung für die Klammer eingegeben wird, deren Lesezeichen-Seite angezeigt worden ist; und
wenn die Zieh- und Aufwärtsberührung in der Links-/Rechtsrichtung in dem Zustand eingegeben wird, in dem die Abwärtsberührung für die Klammer eingegeben wird, deren Lesezeichen-Seite angezeigt worden ist, ein Bewegen (722) zu der Lesezeichen-Seite, die dem vorher hinzugefügten Lesezeichen entspricht.

10. Verfahren nach Anspruch 6, ferner aufweisend:
ein Bestimmen (725), ob eine Abwärtsberührung für eine Klammer eingegeben wird, die einem vorher hinzugefügten Lesezeichen in dem E-Book entspricht, und anschließend in einem Zustand, in dem die Abwärtsberührung eingegeben wird, eine Zieh- und Aufwärtsberührung in der Aufwärtsrichtung eingegeben wird; und
wenn die Abwärtsberührung für die Klammer eingegeben wird, die dem vorher hinzugefügten Lesezeichen in dem E-Book entspricht, und anschließend in dem Zustand, in dem die Abwärtsberührung eingegeben wird, die Zieh- und Aufwärtsberührung in der Aufwärtsrichtung eingegeben wird, ein Löschen (727) einer Klammer, die dem vorher hin zugefügten Lesezeichen entspricht.

11. Tragbares Endgerät, aufweisend einen E-Book-Viewer (108) und eine Anzeigeeinheit (106), wobei der E-Book-Viewer (108) angeordnet ist, um ein Verfahren nach einem der Ansprüche 1 bis Anspruch 10 auszuführen.

## Revendications

1. Procédé pour tourner les pages d'un livre numérique, e-book, sur un terminal portable ayant une fonction e-book, le procédé comprenant :
l'exécution (303) d'un e-book ;
en réponse à la détermination (505) qu'un toucher vers le bas est entré dans une zone d'activation d'interface utilisateur, UI, droite prédéterminée de l'e-book, si un glisser - toucher vers le haut est entré dans une direction gauche, l'affichage (511) de la page juste après sur un écran, et si un glisser est entré dans une direction à droite dans l'état dans lequel le toucher vers le bas est entré dans la zone d'activation UI droite prédéterminée, l'affichage (515) du nombre de pages augmentant d'autant que le glisser sur un côté droit de l'e- book ;
et en réponse à la détermination (521) qu'un toucher vers le bas est entré dans une zone d'activation UI gauche prédéterminée de l'e-book, si un glisser - toucher vers le haut est entré dans une direction droite, l'affichage (527) de la page juste avant sur l'écran, et si un glisser est entré dans une direction gauche dans l'état dans lequel le toucher vers le bas est entré dans la zone d'activation UI gauche prédéterminée, l'affichage (531) du nombre de pages diminuant d'autant que le glisser sur le côté gauche de l'e- book.

2. Procédé selon la revendication 1, comprenant en outre :
quand le toucher vers le bas est entré dans la zone d'activation UI droite prédéterminée de l'e-book, l'affichage (507) du côté droit de l'e-book ; et quand le toucher vers le bas est entré dans la zone d'activation UI gauche prédéterminée de l'e-book, l'affichage (523) du côté gauche de l'e-book.

3. Procédé selon la revendication 1, dans lequel une zone droite partielle de l'écran est définie comme une zone d'activation UI droite et une zone gauche partielle de l'écran est définie comme une zone d'activation UI gauche.

4. Procédé selon la revendication 1, dans lequel l'affichage (515) du nombre de pages augmentant d'autant que le glisser sur un côté droit de l'e-book comprenant :
si un glisser - toucher vers le haut est entré dans la direction gauche dans l'état dans lequel le glisser est entré dans la direction droite, l'affichage (519) d'une page suivante correspondant au nombre de pages augmentées.

5. Procédé selon la revendication 1, dans lequel l'affichage (515) du nombre de pages diminuant d'autant que le glisser sur le côté gauche de l'e-book comprenant :
si un glisser - toucher vers le haut est entré dans la direction droite dans l'état dans lequel le glisser est entré dans la direction gauche, l'affichage (535) d'une page précédente correspondant au nombre de pages diminuées.

6. Procédé selon la revendication 1, comprenant en outre :
la détermination (705) si un commutateur d'activation de signet est touché dans une zone d'activation UI supérieure prédéterminée de l'e-book ;
et quand le commutateur d'activation de signet est touché dans la zone d'activation UI supérieure prédéterminée de l'e-book, l'activation (707) d'une fonction de signet.

7. Procédé selon la revendication 6, comprenant en outre :
la détermination (709) si un toucher vers le bas est entré dans la zone d'activation UI supérieure prédéterminée de l'e-book et ensuite, dans un état dans lequel le toucher vers le bas est entré, un glisser est entré dans la direction vers le bas ;
quand le toucher vers le bas est entré dans la zone d'activation UI supérieure prédéterminée de l'e-book et ensuite, dans l'état dans lequel le toucher vers le bas est entré, le glisser est entré dans la direction vers le bas, la génération (711) d'un trombone correspondant à un signet à ajouter ;
la détermination (713) si un toucher vers le haut est entré dans l'état dans lequel le glisser est entré dans la direction vers le bas ;
et quand le toucher vers le haut est entré dans l'état dans lequel le glisser est entré dans la direction vers le bas, le positionnement (715) du trombone généré à un emplacement où le toucher vers le haut est entré.

8. Procédé selon la revendication 6, comprenant en outre :
la détermination (717) si un toucher vers le bas est entré pour un trombone correspondant à un signet préalablement ajouté dans l'e-book ;
quand le toucher vers le bas est entré pour le trombone correspondant au signet préalablement ajouté dans l'e-book, l'affichage (718) d'une page de signet correspondant ;
la détermination (719) si un long toucher est détecté pour le trombone dont la page de signet a été affichée ;
et quand le long toucher est détecté pour le trombone dont la page de signet a été affichée, l'affichage (720) d'informations sur le signet préalablement ajouté.

9. Procédé selon la revendication 6, comprenant en outre :
la détermination (717) si un toucher vers le bas est entré pour un trombone correspondant à un signet préalablement ajouté dans l'e-book ;
quand le toucher vers le bas est entré pour le trombone correspondant au signet préalablement ajouté dans l'e-book, l'affichage (718) d'une page de signet correspondant ;
la détermination (721) si un glisser - toucher vers le haut est entré dans la direction gauche/droite dans un état dans lequel le toucher vers le bas est entré pour le trombone dont la page de signet a été affichée ;
et quand le glisser - toucher vers le haut est entré dans la direction gauche/droite dans l'état dans lequel le toucher vers le bas est entré pour le trombone dont la page de signet a été affichée, le déplacement (722) vers la page de signet correspondant au signet préalablement ajouté.

10. Procédé selon la revendication 6, comprenant en outre :
la détermination (725) si un toucher vers le bas est entré pour un trombone correspondant à un signet préalablement ajouté dans l'e-book et ensuite, dans un état dans lequel le toucher vers le bas est entré, un glisser - toucher vers le haut est entré dans la direction vers le haut ;
et quand le toucher vers le bas est entré pour le trombone correspondant au signet préalablement ajouté dans l'e-book et ensuite, dans l'état dans lequel le toucher vers le bas est entré, le glisser - toucher vers le haut est entré dans la direction vers le haut, la suppression (727) d'un trombone correspondant au signet préalablement ajouté.

11. Terminal portable comprenant une liseuse d'e-book (108) et une unité d'affichage (106) dans lequel la liseuse d'e-book (108) est conçue pour exécuter un procédé selon l'une quelconque des revendications 1 à 10.
